# FASCICULE DE BREVET EUROPEEN

(11) **EP 2 481 946 B1**
(45) Date de publication et mention de la délivrance du brevet: **31.12.2014**
(21) Numéro de dépôt: 12000515.2
(22) Date de dépôt: 26.01.2012
(51) Int. Cl.: F16F 9/20, F16F 9/49

(54) **Dispositif d'amortissement de traînée amélioré**
Verbesserte Zugdämpfungsvorrichtung
Device for improved drag damping

(30) Priorité: 31.01.2011 FR 1100285
(43) Date de publication de la demande: 01.08.2012
(73) Titulaire: Airbus Helicopters, 13725 Marignane Cedex (FR)
(72) Inventeur: Lopez, Cédric, 13220 Chateauneuf les Martigues (FR); Talon, Benjamin, 46000 Cahors (FR)
(74) Mandataire: GPI & Associés

(56) Documents cités:
- EP-A1- 1 659 309
- FR-A- 1 292 739
- NL-A- 9 202 218
- US-A- 5 347 771
- US-A- 5 517 898

## Description

La présente invention est issue de la demande FR1100285 dont la teneur est incorporée ici par référence

L'invention se rapporte au domaine technique général de la mécanique et de l'hydraulique.

L'invention concerne l'amortissement d'un système mécanique et plus particulièrement des équipements comportant des systèmes d'amortissement utilisés dans l'aéronautique.

L'invention trouve son application dans tout système amortisseur et tout particulièrement dans des amortisseurs de traînée utilisés sur un rotor principal de giravion, et notamment d'un hélicoptère.

A titre d'exemple, sur un rotor d'hélicoptère, dit « soft in plane », un système nommé amortisseur de traînée, relie chaque pale au moyeu dudit rotor ou relie deux pales consécutives entre elles. Un tel amortisseur équipe également les rotors de type dit « stiff in plane » en langue anglaise par nécessité mais est généralement moins sollicité que dans le cas précédent.

Un tel amortisseur permet d'éviter des couplages catastrophiques entre les mouvements en traînée des pales et la cellule de l'hélicoptère. Ces phénomènes sont connus sous le nom de « résonance sol » et « résonance air ».

Un tel amortisseur subit des mouvements forcés à la fréquence de rotation du rotor, dus aux mouvements de pas et de battement de ladite pale mais aussi aux mouvements de traînée de la pale. L'amortisseur n'influe que très faiblement sur ces mouvements.

L'amortisseur subit également des mouvements à la fréquence propre de traînée de la pale. Ces mouvements ne sont pas amortis naturellement, par exemple par les efforts aérodynamiques. L'amortisseur intervient par conséquent pour s'opposer à tout phénomène de résonance.

L'amortissement du débattement des pales en traînée, en vue d'assurer la stabilité de l'hélicoptère, permet de prévenir des phénomènes de résonance sol et de résonance air.

Pour générer une loi d'amortissement adéquate, il est connu d'utiliser des amortisseurs particuliers. Ces amortisseurs sont basés en général sur une loi caractéristique d'effort en fonction du débattement dynamique de l'amortisseur, laquelle présente trois plages distinctes d'amortissement dépendant de la sollicitation dynamique en déplacement à laquelle ils sont soumis. Une telle loi est appelée loi de type « triple pente ».

Le document EP 1 659 309 décrit, un amortisseur hydraulique de traînée de pales d'un hélicoptère, comportant des restrictions hydrauliques formées par des orifices calibrés et des clapets écrêteurs hydrauliques pour générer une loi d'amortissement de type « triple pente » telle que présentée ci-dessus. L'amortisseur décrit dans ce document comporte également une butée de fin de course en élastomère. Cet amortisseur présente cependant des inconvénients. En effet, la présence d'une butée mécanique en élastomère ne permet pas d éviter l'apparition de pics d'efforts résultant de chocs mécaniques lorsque l'amortisseur arrive en fin de course. Il convient par ailleurs de souligner la difficulté liée au réglage de des clapets écrêteurs. L'amortisseur doit en effet être démonté pour procéder au réglage puis remonté.

Le document FR1292739 décrit un dispositif d'amortissement hydraulique. Une embase d'un piston s'adapte à l'alésage d'un étranglement d'un cylindre, tandis qu'un anneau est déplaçable axialement.

Le document US5347771 décrit un système de sécurité contre les tremblements de terre, avec un dispositif à fort amortissement pourvu d'un piston. Des chambres du dispositif sont hydrauliquement aptes à être reliées à travers le piston.

Le document NL9202218 décrit un piston d'amortissement perforé qui coulisse dans un cylindre, avec un agencement intégré au piston qui, en limite de fin de course, libère un passage de déchargement de fluide, ce passage étant normalement fermé par un moyen d'étanchéité.

Le document US5517898 décrit un cylindre pneumatique qui utilise des chemises d'amortissement, des valves d'échappement rapide et des vannes d'alimentation rapide.

Le but de la présente invention vise par conséquent à assurer un amortissement d'un système mécanique en évitant la génération d'un pic d'effort lors de l'arrivée en fin de course d'un dispositif d'amortissement.

Le but de l'invention vise plus particulièrement à assurer un amortissement d'un système mécanique en évitant la génération d'un pic d'effort lors de l'arrivée en fin de course d'un amortisseur de traînée.

La présente invention a pour objet de proposer un nouveau dispositif d'amortissement totalement mécanique, robuste et fiable, respectant les normes aéronautiques.

La présente invention a également pour objet de proposer un nouveau dispositif d'amortissement dont la compacité permet une intégration sur un rotor principal d'un giravion.

Un autre objet de la présente invention vise à proposer un nouveau dispositif d'amortissement simple permettant de diminuer les coûts de fabrication.

Un autre objet de la présente invention vise notamment de proposer un nouveau dispositif d'amortissement dont les opérations de maintenance sont facilitées.

Les objets assignés à l'invention sont atteints à l'aide d'un dispositif d'amortissement défini par les revendications pour amortir les mouvements relatifs de deux éléments d'un système mécanique. Ce dispositif comporte :
- une chambre d'amortissement remplie avec un fluide hydraulique et solidaire mécaniquement de l'un des éléments,
- une tige reliée à l'autre des éléments et comportant un piston logé et déplaçable dans la chambre d'amortissement de manière à délimiter deux compartiments hydrauliques,
- au moins un orifice calibré, ménagé dans le piston pour laminer le fluide hydraulique d'un compartiment hydraulique vers un autre lorsque le piston travaille en traction ou en compression,
- au moins un clapet écrêteur hydraulique de compression et au moins un clapet écrêteur hydraulique de traction, laminant du fluide hydraulique d'un compartiment hydraulique vers un autre à partir d'une amplitude de déplacement déterminée du piston,

Ce dispositif d'amortissement comprend un moyen hydraulique complémentaire, lequel est actif en compression et en traction dès que le piston arrive en fin de course, pour constituer une butée hydraulique progressive amortissant les chocs de fin de course dudit piston.

Le dispositif d'amortissement conforme à l'invention permet donc de disposer d'un amortissement supplémentaire en fin de course. On obtient ainsi une montée progressive de l'effort en fin de course grâce à cette butée hydraulique progressive.

De plus, le moyen hydraulique complémentaire comporte dans chaque zone de fin de course du piston une bague présentant des orifices radiaux, ladite bague étant montée et centrée sur un épaulement cylindrique en saillie dans le compartiment hydraulique correspondant de manière à délimiter entre ladite bague et ledit épaulement un espace annulaire de circulation de fluide en communication fluidique d'une part avec le compartiment hydraulique correspondant et d'autre part avec le clapet écrêteur hydraulique correspondant via les orifices radiaux, le moyen hydraulique complémentaire comportant également une extrémité creuse du piston venant entourer la bague et obturer progressivement les orifices radiaux lors du déplacement axial de fin de course dudit piston.

Selon un exemple de réalisation du dispositif d'amortissement conforme à l'invention, l'épaulement est formé par une paroi d'extrémité du compartiment hydraulique correspondant.

Selon un exemple de réalisation du dispositif d'amortissement conforme à l'invention, ce dernier comporte une chambre de compensation remplie d'air à la pression atmosphérique pour compenser les variations de volume du fluide hydraulique en fonction de la température.

Selon un exemple de réalisation du dispositif d'amortissement conforme à l'invention, la chambre de compensation est séparée d'une chambre hydraulique additionnelle par un piston de séparation mobile à l'encontre d'une force de rappel d'un ressort lequel est logé dans la chambre de compensation, ladite chambre hydraulique additionnelle étant en communication fluidique avec un compartiment hydraulique de la chambre d'amortissement.

Selon un exemple de réalisation du dispositif d'amortissement conforme à l'invention, ce dernier comporte une butée fixe élastique pour amortir les efforts résiduels de fin de course du piston.

Selon un exemple de réalisation du dispositif d'amortissement conforme à l'invention, chaque clapet écrêteur hydraulique est logé dans un cylindre amovible, inséré dans ledit dispositif, facilitant ainsi leur réglage.

Un tel cylindre peut facilement être extrait du dispositif d'amortissement facilitant leur remplacement, leur maintenance ou leurs réglages hydrauliques sur un banc d'essais hydrauliques.

Selon un exemple de réalisation, le dispositif d'amortissement conforme à l'invention comporte une jauge coopérant avec le piston de séparation pour fournir une indication visuelle sur la quantité de fluide hydraulique contenue dans ledit dispositif.

Selon un exemple de réalisation, le dispositif d'amortissement conforme à l'invention comporte un système de drainage de fuite du fluide hydraulique.

Selon un exemple de réalisation, le dispositif d'amortissement conforme à l'invention comporte un système de lubrification.

Selon un exemple de réalisation, le dispositif d'amortissement conforme à l'invention constitue un amortisseur de traînée pour un aéronef à voilure tournante.

Les objets assignés à l'invention sont également atteints à l'aide d'un aéronef du genre giravion comportant un moyeu de rotor principal entraînant des pales, un amortisseur de traînée reliant chaque pale au moyeu ou à une pale consécutive, l'amortisseur de traînée étant constitué d'un dispositif d'amortissement tel que présenté ci-dessus.

Le dispositif d'amortissement conforme à l'invention présente donc l'avantage de générer une loi d'amortissement permettant d'assurer la stabilité de l'appareil vis-à-vis des phénomènes de résonance air et de résonance sol ainsi que d'éviter l'apparition de pics d'effort de fin de course dudit dispositif.

Un autre avantage du dispositif d'amortissement conforme à l'invention réside dans l'obtention des résultats recherchés, avec un dispositif d'amortissement hydraulique.

Un autre avantage du dispositif d'amortissement conforme à l'invention réside dans le fait qu'il permet de diminuer les balourds constatés au démarrage du rotor principal sur les appareils équipés d'amortisseurs de traînée. En effet, au démarrage du rotor, les vitesses de sollicitation de la tige d'amortisseur sont faibles. L'amortissement s'effectuant par laminage de fluide, est directement proportionnel à la vitesse de déplacement de la tige d'amortisseur. Dans le cas des amortisseurs à butée mécanique connus, l'amortissement est donc faible et le mouvement des pales est peu amorti, générant ainsi un balourd à savoir un déplacement du centre de gravité de la tête rotor hors de l'axe rotor à l'origine du phénomène de résonance sol notamment.

Avec le dispositif d'amortissement conforme à l'invention, pour des vitesses de déplacement faibles de la tige, le dispositif va arriver en fin de course et la butée hydraulique progressive en raison de la diminution de la section débitante de fluide, va générer un amortissement permettant d'atténuer les mouvements de pales générant le balourd.

L'invention et ses avantages apparaîtront avec plus de détails dans le cadre de la description qui suit, avec au moins un exemple de réalisation ou de mise en oeuvre donné à titre illustratif et non limitatif en référence aux dessins annexés dans lesquels :
- la figure 1, est un exemple de courbe présentant trois plages de fonctionnement distinctes, illustrant les efforts subis par un dispositif d'amortissement de traînée en fonction de l'amplitude de déplacement du piston dudit amortisseur,
- la figure 2, est une illustration d'un exemple de réalisation d'un dispositif d'amortissement conforme à l'invention selon une vue en coupe longitudinale,
- la figure 3, est une vue en coupe longitudinale selon la direction A-A de l'exemple de réalisation de la figure 2,
- la figure 4, est une vue agrandie d'un détail de l'exemple de réalisation la figure 2, et
- la figure 5 montre un exemple d'aéronef à voilure tournante selon l'invention, avec un rotor principal et un dispositif d'amortissement hydraulique.

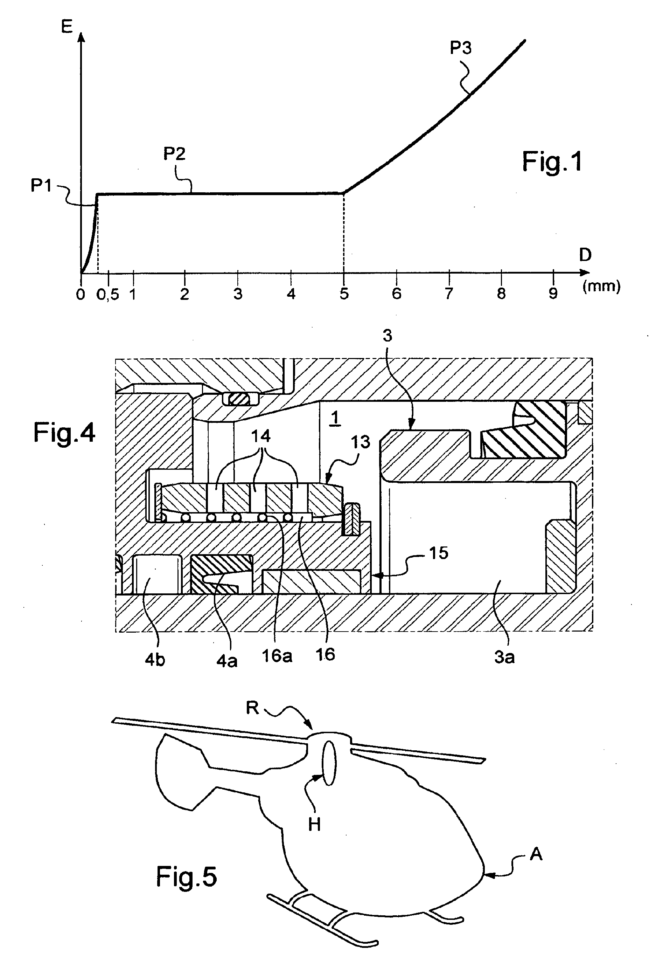

Sur la figure 5, la référence alphanumérique A désigne un aéronef à voilure tournante selon l'invention, à savoir un giravion de type hélicoptère sur cette figure 5. Cet aéronef A possède un rotor, principal R et au moins un dispositif d'amortissement hydraulique H conformes à l'invention.

Les éléments structurellement et fonctionnellement identiques, présents dans plusieurs figures distinctes, sont affectés d'une seule et même référence numérique ou alphanumérique.

La figure 1 est un exemple de courbe présentant trois plages de fonctionnement distinctes, illustrant les efforts E subis par un dispositif d'amortissement de traînée en fonction de l'amplitude de déplacement D en traction ou en compression dudit dispositif. La figure 1 sera explicitée davantage plus en aval dans la présente description.

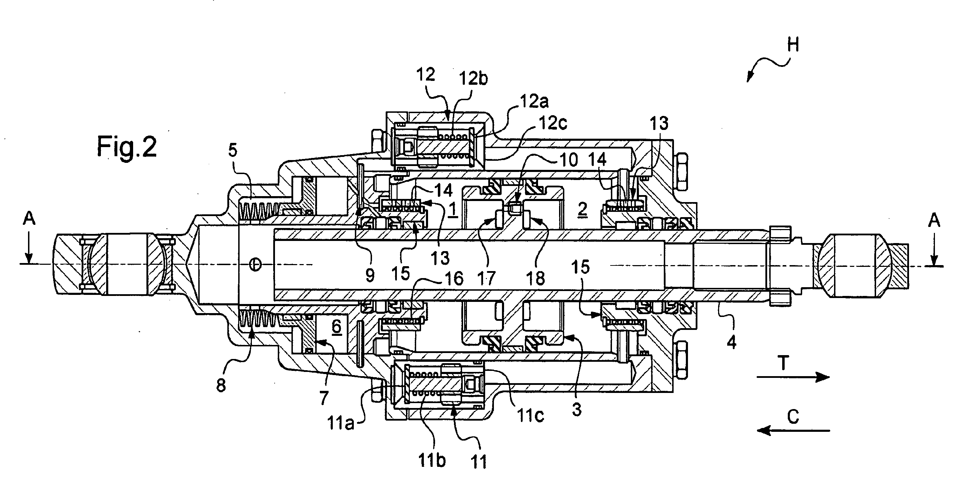

La figure 2 est une illustration d'un exemple de réalisation d'un dispositif d'amortissement H conforme à l'invention selon une vue en coupe longitudinale.

Le dispositif d'amortissement comprend une chambre hydraulique séparée en deux compartiments hydrauliques travaillants 1 et 2 par l'intermédiaire d'un piston 3 faisant partie d'une tige 4 du dispositif d'amortissement H.

Le dispositif d'amortissement H comporte également une chambre de compensation 5, remplie d'air à la pression atmosphérique. Cette chambre de compensation 5 est séparée d'une chambre hydraulique additionnelle 6 par un piston de séparation 7.

La chambre de compensation 5 contient un ressort mécanique 8 qui assure la compensation des variations du volume d'huile liées aux variations de température en exerçant un effort sur le piston de séparation 7. La chambre hydraulique additionnelle 6 est à cet effet directement en communication fluidique avec une chambre hydraulique intermédiaire 9 communiquant avec le compartiment hydraulique 1.

Lors de la sollicitation en traction du dispositif d'amortissement H, la tige 4 reliée à la pale, se déplace dans le sens T et comprime le fluide hydraulique dans le compartiment hydraulique 2. Le fluide est forcé à passer au travers de restrictions hydrauliques vers l'autre compartiment hydraulique 1. Pour les déplacements dynamiques D inférieurs à 0,5mm (plage correspondant à la résonance sol), le fluide hydraulique est laminé au travers d'un orifice calibré 10.

Le dispositif d'amortissement H comporte également au moins un clapet écrêteur hydraulique de compression 11 et au moins un clapet écrêteur hydraulique de traction 12, laminant du fluide hydraulique d'un compartiment hydraulique 1,2 vers l'autre 2,1 à partir d'une amplitude de déplacement déterminée du piston 3.

Le clapet écrêteur hydraulique de traction 12 reste fermé pour des amplitudes de déplacement inférieures à 0,5mm.

Le clapet écrêteur hydraulique de compression 11, monté en opposition par rapport au clapet écrêteur de traction 12, reste fermé durant toute la phase de sollicitation en traction du dispositif d'amortissement H.

L'ouverture du clapet écrêteur hydraulique de traction 12 s'effectue pour les déplacements dynamiques D supérieurs à 0,5mm de manière à écrêter l'effort d'amortissement E.

Le clapet écrêteur hydraulique de traction 12 est composé d'un organe d'obturation 12a qui peut se déplacer axialement et d'un ressort 12b agissant sur ledit l'organe d'obturation 12a. Une précontrainte du ressort 12b fixe le seuil d'écrêtage de l'effort E et l'ouverture de l'organe d'obturation 12a détermine le coefficient d'amortissement.

Avec l'ouverture de l'organe d'obturation, une phase transitoire débute durant laquelle la pression hydraulique augmente. L'organe d'obturation continue à s'ouvrir jusqu'à atteindre la saturation hydraulique pour des déplacements dynamiques supérieurs à 5 mm.

Pour des déplacements allant au-delà de 5mm de débattement dynamique D, débute une phase dans laquelle la pente est réglée afin d'obtenir un coefficient d'amortissement nécessaire pour assurer la stabilité de l'appareil et éviter la résonance air. Cette pente est réglée par le dimensionnement des sections de passage hydraulique au niveau des clapets hydrauliques écrêteurs 12. Ces sections de passage dépendent du réglage de la butée mécanique agissant sur la course desdits clapets.

Le fluide hydraulique traversant le clapet écrêteur hydraulique de traction 12 rejoint la chambre hydraulique intermédiaire 9 qui communique avec le compartiment hydraulique 1 via un clapet anti-retour.

Lors de la sollicitation en compression du dispositif d'amortissement H, la tige 4 reliée à une pale, se déplace dans le sens C et comprime le fluide hydraulique dans le compartiment hydraulique 1. Le fluide est forcé à passer au travers de restrictions hydrauliques vers l'autre compartiment hydraulique 2.

Pour les déplacements dynamiques D inférieurs à 0,5mm (plage de la résonance sol), le fluide hydraulique est laminé à travers l'orifice calibré 10.

Le clapet écrêteur hydraulique de compression est fermé pour des déplacements dynamiques D inférieurs à 0,5 mm et le clapet écrêteur hydraulique de traction, monté en opposition, reste fermé durant toute la phase de sollicitation en compression du dispositif.

L'ouverture du clapet écrêteur hydraulique de compression s'effectue pour les déplacements dynamiques D supérieurs à 0,5mm de manière à écrêter l'effort E.

Le clapet écrêteur hydraulique de compression 11 est composé d'un organe d'obturation 11a qui peut se déplacer axialement et d'un ressort 1 1 b agissant sur l'organe d'obturation 11a. Une précontrainte du ressort 1 1 b fixe le seuil d'écrêtage de l'effort E et l'ouverture de l'organe d'obturation détermine le coefficient d'amortissement.

Suite à cette ouverture, une phase transitoire débute durant laquelle la pression hydraulique augmente et l'organe d'obturation 11a continue à s'ouvrir jusqu'à atteindre la saturation hydraulique pour des déplacements dynamiques D supérieurs à 5 mm.

Au-delà de 5mm de débattement dynamique D, une phase débute dans laquelle la pente est réglée afin d'obtenir un coefficient d'amortissement nécessaire pour assurer la stabilité de l'appareil et éviter la résonance air. Cette pente est réglée par le dimensionnement des sections de passage hydraulique au niveau des clapets hydrauliques écrêteurs 11. Ces sections de passage dépendent du réglage de la butée mécanique agissant sur la course desdits clapets.

Le fluide traversant le clapet écrêteur hydraulique de compression 11 rejoint directement le compartiment hydraulique 2.

Afin de faciliter les réglages hydrauliques et la maintenance, les clapets écrêteurs hydrauliques 11 et 12 sont contenus dans des cylindres amovibles qui peuvent être aisément insérés ou ôtés du dispositif d'amortissement H. Ainsi les réglages hydrauliques de ces clapets peuvent être faits sur un banc d'essais hydrauliques, complètement dissocié du dispositif d'amortissement.

Lorsque les débattements de l'amortisseur deviennent supérieurs aux débattements admissibles et que la fin de course amortisseur est atteinte, un moyen hydraulique complémentaire, désigné par les termes de « butée hydraulique progressive », génère un effort d'amortissement progressif qui permet de prévenir les chocs mécaniques et d'atténuer les mouvements des pales d'un rotor R en traînée.

Le moyen hydraulique complémentaire comporte dans chaque zone de fin de course du piston 3, une bague 13 présentant des orifices radiaux calibrés 14. La bague 13 est montée et centrée sur un épaulement cylindrique 15 en saillie dans le compartiment hydraulique 1,2 correspondant, de manière à délimiter entre ladite bague 13 et ledit épaulement 15 un espace annulaire de circulation 16 de fluide hydraulique. Un ressort 16a monté sur l'épaulement cylindrique 15, permet de maintenir la bague 13 dans une position axiale stable, évitant ainsi que ladite bague 13 ne vibre au gré des sollicitations qui peuvent s'exercer sur elle.

Cet espace de circulation annulaire 16 est en communication fluidique d'une part avec le compartiment hydraulique 1,2 correspondant et d'autre part avec le clapet écrêteur hydraulique 11,12 correspondant via les orifices calibrés radiaux 14.

Le moyen hydraulique complémentaire comporte également une extrémité creuse 3a du piston 3, venant entourer la bague 13 et obturer progressivement les orifices radiaux calibrés 14, lors du déplacement axial de fin de course dudit piston 3.

On pourra se reporter à la figure 4, qui est une vue agrandie d'un détail de l'exemple de réalisation de la figure 2.

L'épaulement 15 est formé éventuellement par une paroi d'extrémité du compartiment hydraulique 1,2 correspondant.

En se reportant à la figure 1, on considère que la tige 4 du dispositif d'amortissement H, reliée par exemple à une pale, comprime un fluide hydraulique et le force à passer au travers de restrictions hydrauliques qui assurent la loi d'amortissement nécessaire à la stabilité de l'hélicoptère A.

Le dispositif d'amortissement possède trois plages P1, P2 et P3 d'amortissement dépendant de la sollicitation dynamique en déplacement D à laquelle il est soumis. Ces différentes plages présentant des pentes différentes sont obtenues par une variation de la section débitante globale des restrictions hydrauliques mises en oeuvre dans le dispositif d'amortissement.

Un premier laminage par l'orifice calibré 10, génère l'effort E d'amortissement pour des déplacements dynamiques D du piston, par exemple inférieurs à 0,5 mm. Ces déplacements correspondent à la première plage d'amortissement P1 (première pente).

Au-delà, deux clapets écrêteurs hydrauliques 11,12 travaillant en opposition (un pour la phase de compression du dispositif et l'autre pour la phase de traction du dispositif) sont disposés en parallèle de l'orifice calibré 10 et s'ouvrent pour écrêter l'effort E lors de déplacements dynamiques D par exemple compris entre 0,5 et 5 mm Ces déplacements correspondent à la seconde plage d'amortissement P2 (seconde pente).

Pour des déplacements supérieurs à 5 mm, les clapets écrêteurs hydrauliques 11,12 arrivent en butée mécanique et provoquent une saturation hydraulique. Ces déplacements correspondent à la troisième plage d'amortissement P3 (troisième pente).

La loi d'effort d'amortissement E en fonction des débattements dynamiques D du dispositif d'amortissement est ainsi présentée à la figure 1.

Lorsque les débattements dynamiques D du dispositif d'amortissement deviennent supérieurs aux débattements admissibles et que la fin de course dudit dispositif est atteinte, le moyen hydraulique complémentaire, désigné par le terme de butée hydraulique progressive, génère un effort d'amortissement progressif qui permet de prévenir les chocs mécaniques et d'atténuer les mouvements des pales en traînée qui peuvent induire du balourd lors du démarrage du rotor principal.

Constitué notamment de la bague 13 possédant les orifices calibrés radiaux 14, ce moyen hydraulique complémentaire fonctionne uniquement lorsque le dispositif d'amortissement arrive en fin de course. Le piston 3 du dispositif d'amortissement présente à cet effet une forme creuse 3a qui vient entourer la bague 13 et obturer ainsi progressivement les orifices radiaux calibrés 14 afin de générer un effort d'amortissement progressif. Aucun pic d'effort E, risquant d'altérer le dispositif d'amortissement, n'est alors généré.

En effet, lors de la sollicitation en traction de la tige 4, si la totalité de la course admissible est parcourue, le piston 3 continue à pousser le fluide hydraulique qui chemine sous la bague 13 et qui est laminé au travers des orifices radiaux calibrés 14. Ces derniers sont obturés progressivement par le piston 3 qui vient entourer la bague 13. Ainsi un effort d'amortissement progressif est généré.

Lors de la sollicitation en compression de la tige 4, si la totalité de la course admissible est parcourue, le piston 3 continue à pousser le fluide hydraulique qui chemine sous la bague 13 et qui est laminé au travers des orifices radiaux calibrés 14. Ces derniers sont obturés progressivement par le côté opposé du piston 3 qui vient entourer la bague 13.

Les butées hydrauliques progressives, proposées dans le dispositif d'amortissement conforme à l'invention, permettent ainsi un amortissement progressif ce que ne permettent pas les butées mécaniques mises en oeuvre dans les amortisseurs de traînée connus.

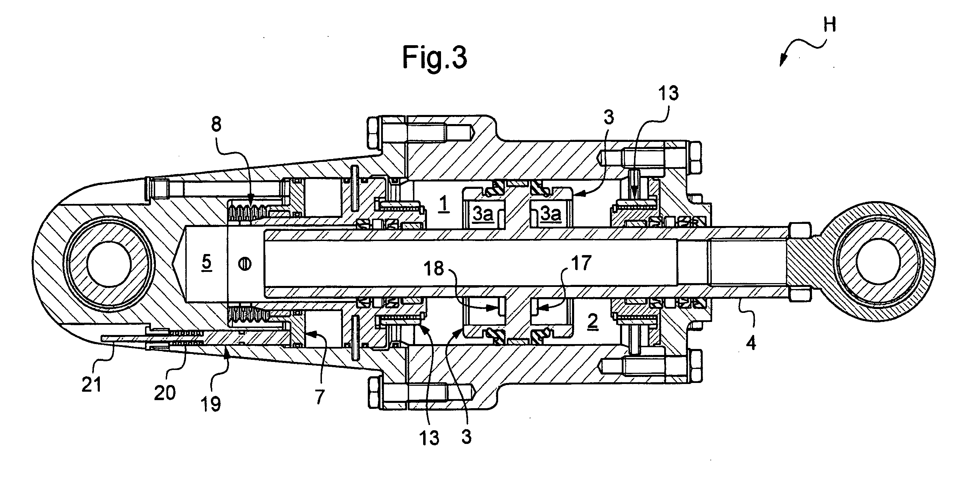

La figure 3 est une vue en coupe longitudinale selon la direction A-A de l'exemple de réalisation de la figure 2.

Avantageusement, le dispositif d'amortissement conforme à l'invention comporte en association avec la butée hydraulique progressive, des butées fixes élastiques 17,18, pour amortir les efforts résiduels de fin de course du piston 3. Ces butées fixes 17,18 par exemple en élastomère, sont montées sur le piston 3.

Le dispositif d'amortissement conforme à l'invention comporte avantageusement une jauge 19 coopérant avec le piston de séparation 7 pour fournir une indication visuelle sur la quantité de fluide hydraulique contenue dans ledit dispositif.

Afin de connaître la position du piston de séparation 7, qui permet d'avoir une information sur le volume de fluide hydraulique présent dans le dispositif d'amortissement, la jauge 19 est constituée d'un ressort 20 qui maintient en contact avec le piston de séparation 7, un doigt 21 dont la longueur visible depuis l'extérieur indique la position axiale dudit piston de séparation 7.

Selon un exemple de réalisation conforme à l'invention, le dispositif d'amortissement comporte un système de drainage de fuite du fluide hydraulique. Un canal hydraulique 4b, situé entre deux joints 4a assurant l'étanchéité au niveau des guidages de la tige 4, entre l'extérieur et la chambre de compensation 5, permet en cas de fuite du joint 4a interne qui est le plus sollicité, lesquels sont soumis directement à la pression, de drainer le fluide hydraulique non retenu par lesdits joints défaillants, vers la chambre hydraulique intermédiaire 9.

Selon un exemple de réalisation conforme à l'invention, le dispositif d'amortissement comporte un système de lubrification. En effet, la présence du canal hydraulique situé entre les joints, permet d'obtenir une lubrification desdits joints, au niveau des guidages de la tige 4, améliorant ainsi leur fonctionnement.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif d'amortissement (H) pour amortir les mouvements relatifs de deux éléments d'un système mécanique, comportant :
- une chambre d'amortissement remplie avec un fluide hydraulique et solidaire mécaniquement de l'un des éléments,
- une tige (4) reliée à l'autre des éléments et comportant un piston (3) logé et déplaçable dans la chambre d'amortissement de manière à délimiter deux compartiments hydrauliques (1,2),
- au moins un orifice calibré (10), ménagé dans le piston (3) pour laminer le fluide hydraulique d'un compartiment hydraulique (1,2) vers un autre (2, 1) lorsque le piston (3) travaille en traction ou en compression,
- au moins un clapet écrêteur hydraulique de compression (11) et au moins un clapet écrêteur hydraulique de traction (12), laminant du fluide hydraulique d'un compartiment hydraulique (1,2) vers un autre (2,1) à partir d'une amplitude de déplacement déterminée du piston (3),
**caractérisé en ce qu'**il comprend un moyen hydraulique complémentaire actif en compression et en traction dès que le piston (3) arrive en fin de course, pour constituer une butée hydraulique progressive amortissant les chocs de fin de course dudit piston (3), ce moyen hydraulique complémentaire comportant :
- dans chaque zone de fin de course du piston (3) une bague (13) présentant des orifices radiaux calibrés (14), ladite bague (13) étant montée et centrée sur un épaulement cylindrique (15) en saillie dans le compartiment hydraulique (1,2) correspondant de manière à délimiter entre ladite bague (13) et ledit épaulement (15) un espace annulaire (16) de circulation de fluide en communication fluidique d'une part avec le compartiment hydraulique (1,2) correspondant et d'autre part avec le clapet écrêteur hydraulique (11,12) correspondant via les orifices calibrés radiaux (14),
- une extrémité creuse (3a) du piston (3) venant entourer la bague (13) et obturer progressivement les orifices radiaux calibrés (14) lors du déplacement axial de fin de course dudit piston (3).

2. Dispositif d'amortissement selon la revendication 1,
**caractérisé en ce que** l'épaulement (15) est formé par une paroi d'extrémité du compartiment hydraulique (1,2) correspondant.

3. Dispositif d'amortissement selon l'une quelconque des revendications 1 à 2,
**caractérisé en ce que** le dispositif d'amortissement (H) comporte une chambre de compensation (5) remplie d'air à la pression atmosphérique pour compenser les variations de volume du fluide hydraulique en fonction de la température.

4. Dispositif d'amortissement selon la revendication 3,
**caractérisé en ce que** la chambre de compensation (5) est séparée d'une chambre hydraulique additionnelle (6) par un piston de séparation (7) mobile à l'encontre d'une force de rappel d'un ressort (8) lequel est logé dans la chambre de compensation (5), ladite chambre hydraulique additionnelle (6) étant en communication fluidique avec le compartiment hydraulique (1) de la chambre d'amortissement.

5. Dispositif d'amortissement selon l'une quelconque des revendications 1 à 4,
**caractérisé en ce que** le dispositif d'amortissement (H) comporte une butée fixe élastique (17,18) pour amortir les efforts résiduels de fin de course du piston (3).

6. Dispositif d'amortissement selon l'une quelconque des revendications 1 à 5,
**caractérisé en ce que** chaque clapet écrêteur hydraulique (11,12) est logé dans un cylindre amovible (12c), inséré dans ledit dispositif, facilitant ainsi leur réglage.

7. Dispositif d'amortissement selon la revendication 4,
**caractérisé en ce que** le dispositif d'amortissement (H) comporte une jauge (19) coopérant avec le piston de séparation (7) pour fournir une indication visuelle sur la quantité de fluide hydraulique contenue dans ledit dispositif.

8. Dispositif d'amortissement selon l'une quelconque des revendications 1 à 7,
**caractérisé en ce que** le dispositif d'amortissement (H) comporte un système de drainage de fuite du fluide hydraulique.

9. Dispositif d'amortissement selon l'une quelconque des revendications 1 à 8,
**caractérisé en ce que** le dispositif d'amortissement (H) comporte un système de lubrification.

10. Dispositif d'amortissement selon l'une quelconque des revendications 1 à 9,
**caractérisé en ce que** le dispositif d'amortissement (H) constitue un amortisseur de traînée pour un aéronef à voilure tournante.

11. Aéronef (A) comportant un moyeu de rotor principal entraînant des pales, un amortisseur de traînée reliant chaque pale au moyeu ou à une pale consécutive, **caractérisé en ce que** l'amortisseur de traînée est constitué d'un dispositif d'amortissement (H) conforme à l'une quelconque des revendications 1 à 9.

## Patentansprüche

1. Dämpfungsvorrichtung (H) zum Dämpfen der Relativbewegungen zweier Elemente eines mechanischen Systems, mit:
- einer Dämpfungskammer, die mit einem Hydraulikfluid gefüllt ist und mechanisch mit einem der Elemente fest verbunden ist,
- einer Stange (4), die mit dem anderen der Elemente verbunden ist und einen Kolben (3) aufweist, der beweglich in der Dämpfungskammer gelagert ist, derart, dass er zwei Hydraulikkammem (1, 2) begrenzt,
- mindestens einer kalibrierten Öffnung (10), die in den Kolben (3) eingearbeitet ist, um den Fluss des Hydraulikfluids von einer Hydraulikkammer (1, 2) zur anderen (2, 1) zu begrenzen, während der Kolben (3) in Zug- oder Druckbetrieb arbeitet,
- mindestens einem hydraulischen Druckabscheideventil (11) und mindestens einem hydraulischen Zugabscheideventil (12), die den Fluss des Hydraulikfluids von einer Hydraulikkammer (1, 2) zur anderen (2, 1) ausgehend von einem vorbestimmten Hub des Kolbens (3) begrenzen,
**dadurch gekennzeichnet, dass** die Vorrichtung ein zusätzliches hydraulisches Mittel aufweist, welches in Druck- und in Zugbetrieb aktiv ist, sobald der Kolben (3) das Ende des Hubs erreicht, um einen zunehmenden hydraulischen Anschlag zu bilden, der die Endstellungsstöße des Kolbens (3) begrenzt, wobei das zusätzliche hydraulische Mittel aufweist:
- in jedem Endstellungsbereich des Kolbens (3) einen Ring (13), der radiale kalibrierte Öffnungen (14) aufweist, wobei der Ring (13) auf einer zylinderförmigen Schulter (15) montiert und zentriert ist, die in die entsprechende Hydraulikkammer (1, 2) derart hineinragt, dass zwischen dem Ring (13) und der Schulter (15) ein ringförmiger Fluidströmungsraum (16) eingegrenzt wird, der fluidmäßig einerseits mit der entsprechenden Hydraulikkammer (1, 2) und andererseits mit dem entsprechenden hydraulischen Abscheideventil (11, 12) über die radialen kalibrierten Öffnungen (14) in Verbindung steht,
- ein hohles Ende (3a) des Kolbens (3), welches den Ring (13) umschließt und schrittweise die kalibrierten radialen Öffnungen (14) während der axialen Bewegung des Kolbens (3) auf seine Endstellung zu verschließt.

2. Dämpfungsvorrichtung nach Anspruch 1,
**dadurch gekennzeichnet, dass** die Schulter (15) von einer Endfläche der entsprechenden Hydraulikkammer (1, 2) gebildet wird.

3. Dämpfungsvorrichtung nach einem der Ansprüche 1 bis 2,
**dadurch gekennzeichnet, dass** die Dämpfungsvorrichtung (H) eine Kompensationskammer (5) aufweist, die mit Luft bei Atmosphärendruck gefüllt ist, um die Volumenänderungen des Hydraulikfluids in Abhängigkeit von der Temperatur zu kompensieren.

4. Dämpfungsvorrichtung nach Anspruch 3,
**dadurch gekennzeichnet, dass** die Kompensationskammer (5) von einer zusätzlichen Hydraulikkammer (6) durch einen beweglichen Trennkolben (7) getrennt ist, gegen eine Rückholkraft einer Feder (8), die in der Kompensationskammer (5) gelagert ist, wobei die zusätzliche Hydraulikkammer (6) in Fluidkontakt mit der Hydraulikkammer (1) der Dämpfungskammer steht.

5. Dämpfungsvorrichtung nach einem der Ansprüche 1 bis 4,
**dadurch gekennzeichnet, dass** die Dämpfungsvorrichtung (H) einen festen elastischen Anschlag (17, 18) aufweist, um die Restkräfte in der Endstellung des Kolbens (3) zu dämpfen.

6. Dämpfungsvorrichtung nach einem der Ansprüche 1 bis 5,
**dadurch gekennzeichnet, dass** jedes hydraulische Abscheideventil (11, 12) in einem abnehmbaren Zylinder (12c) gelagert ist, der in die Vorrichtung eingefügt ist, was somit dessen Einstellung erleichtert.

7. Dämpfungsvorrichtung nach Anspruch 4,
**dadurch gekennzeichnet, dass** die Dämpfungsvorrichtung (H) eine Anzeige (19) aufweist, die mit dem Trennkolben (7) zusammenwirkt, um eine visuelle Anzeige der Hydraulikfluidmenge, die in der Vorrichtung enthalten ist, zu liefern.

8. Dämpfungsvorrichtung nach einem der Ansprüche 1 bis 7,
**dadurch gekennzeichnet, dass** die Dämpfungsvorrichtung (H) ein Drainagesystem für ausgelaufenes Hydraulikfluid aufweist.

9. Dämpfungsvorrichtung nach einem der Ansprüche 1 bis 8,
**dadurch gekennzeichnet, dass** die Dämpfungsvorrichtung (H) ein Schmiersystem aufweist.

10. Dämpfungsvorrichtung nach einem der Ansprüche 1 bis 9,
**dadurch gekennzeichnet, dass** die Dämpfungsvorrichtung (H) eine Zugdämpfungsvorrichtung für ein Drehflügelflugzeug darstellt.

11. Flugzeug (A) mit einer Nabe eines Hauptrotors, der Rotorblätter antreibt, wobei eine Zugdämpfungsvonrichtung jedes Rotorblatt mit der Nabe oder mit einem folgenden Rotorblatt verbindet,
**dadurch gekennzeichnet, dass** die Zugdämpfungsvorrichtung gebildet wird durch eine Dämpfungsvorrichtung (H) nach einem der Ansprüche 1 bis 9.

## Claims

1. A damping device (H) for damping the relative movements of two elements of a mechanical system, comprising:
- a damping chamber filled with a hydraulic fluid and mechanically integral with one of the elements,
- a rod (4) connected to the other one of the elements and comprising a piston (3) housed and displaceable within the damping chamber so as to define two hydraulic compartments (1, 2),
- at least one calibrated orifice (10) formed in the piston (3) for restricting the hydraulic fluid flowing from one hydraulic compartment (1, 2) to another (2, 1) when the piston (3) is working in traction or in compression,
- at least one compression hydraulic limiter valve (11) and at least one traction hydraulic limiter valve (12), restricting the hydraulic fluid flowing from one hydraulic compartment (1, 2) to another (2, 1) as of a given displacement amplitude of the piston (3),
**characterised in that** it comprises a complementary hydraulic means which is active in compression and in traction as soon as the piston (3) reaches the end of its stroke, in order to constitute a progressive hydraulic abutment which damps the end-of-stroke impacts of said piston (3), this complementary hydraulic means comprising:
- in each end-of-stroke zone of the piston (3), a ring (13) having calibrated radial orifices (14), said ring (13) being mounted and centred on a cylindrical shoulder (15) protruding into the corresponding hydraulic compartment (1, 2) so as to define between said ring (13) and said shoulder (15) an annular fluid circulation space (16) which is in fluid communication on one hand with the corresponding hydraulic compartment (1, 2) and on the other hand with the corresponding hydraulic limiter valve (11, 12) via the calibrated radial orifices (14),
- a recessed end (3a) of the piston (3) which surrounds the ring (13) and gradually blocks the calibrated radial orifices (14) upon the end-of-stroke axial displacement of said piston (3).

2. A damping device according to Claim 1,
**characterised in that** the shoulder (15) is formed by an end wall of the corresponding hydraulic compartment (1, 2).

3. A damping device according to any one of Claims 1 to 2,
**characterised in that** the damping device (H) comprises a compensation chamber (5) filled with air at atmospheric pressure in order to compensate for the variations in volume of the hydraulic fluid as a function of the temperature.

4. A damping device according to Claim 3,
**characterised in that** the compensation chamber (5) is separated from an additional hydraulic chamber (6) by a separator piston (7) which is movable counter to a restoring force of a spring (8) which is housed in the compensation chamber (5), said additional hydraulic chamber (6) being in fluidic communication with the hydraulic compartment (1) of the damping chamber.

5. A damping device according to any one of Claims 1 to 4,
**characterised in that** the damping device (H) comprises a resilient fixed abutment (17, 18) in order to dampen the residual end-of-stroke forces of the piston (3).

6. A damping device according to any one of Claims 1 to 5,
**characterised in that** each hydraulic limiter valve (11, 12) is housed within a removable cylinder (12c), inserted into said device, thus facilitating their adjustment.

7. A damping device according to Claim 4,
**characterised in that** the damping device (H) comprises a gauge (19) cooperating with the separator piston (7) for providing a visual indication of the quantity of hydraulic fluid contained in said device.

8. A damping device according to any one of Claims 1 to 7,
**characterised in that** the damping device (H) comprises a drainage system for any leakage of the hydraulic fluid.

9. A damping device according to any one of Claims 1 to 8,
**characterised in that** the damping device (H) comprises a lubrication system.

10. A damping device according to any one of Claims 1 to 9,
**characterised in that** the damping device (H) constitutes a drag damper for a rotary-wing aircraft.

11. An aircraft (A) comprising a main rotor hub driving blades, a drag damper connecting each blade to the hub or to a consecutive blade, **characterised in that** the drag damper is constituted of a damping device (H) in accordance with any one of Claims 1 to 9.
